# EUROPEAN PATENT APPLICATION

(11) **EP 3 062 425 A1**
(43) Date of publication of application: **31.08.2016**
(21) Application number: 16157280.5
(22) Date of filing: 25.02.2016
(51) Int. Cl.: H02K 11/33, B62D 5/04, H02K 11/22

(54) **MOTOR UNIT**

(30) Priority: 27.02.2015 JP 2015039589; 27.02.2015 JP 2015039590; 27.02.2015 JP 2015039591
(71) Applicant: JTEKT Corporation, Chuo-ku, Osaka-shi Osaka 542-8502 (JP)
(72) Inventor: KOJIMA, Yoshihiro, Osaka-shi, Osaka, 542-8502 (JP); KOIKE, Susumu, Osaka-shi, Osaka, 542-8502 (JP); TOYAMA, Yuichi, Osaka-shi, Osaka, 542-8502 (JP); TANIKAWA, Takaya, Osaka-shi, Osaka, 542-8502 (JP); YAMASHITA, Manabu, Osaka-shi, Osaka, 542-8502 (JP)
(74) Representative: Winter, Brandl, Fürniss, Hübner, Röss, Kaiser, Polte - Partnerschaft mbB

(57) **Abstract**

A motor unit includes a motor (12); and a control board configured to execute a control to drive the motor (12). The control board includes a first control board (80) and a second control board (70). The first control board (80) is provided such that a mounting space for at least one electronic component perpendicularly intersects with an extension line extending from a shaft end part (11a) of a motor shaft (11) and extends along a shaft radial direction so as to allow the at least one electronic component to be disposed along the shaft radial direction. The second control board (70) is provided such that a mounting space for at least one electronic component extends along a shaft length direction so as to allow the at least one electronic component to be disposed along the shaft length direction. The motor (12) and the control board are unitized.

## Description

### BACKGROUND OF THE INVENTION

### 1. Field of the Invention

The present invention relates to a motor unit.

### 2. Description of Related Art

Conventionally, for example, a motor unit (a driving device) described in Japanese Patent Application Publication No. 2014-057514 (JP 2014-057514 A) is proposed as a motor unit in which a motor including a rotatable motor shaft and a control board configured to control and drive the motor by supplying driving electric power to the motor are unitized. In the motor unit of JP 2014-057514 A, members are arranged in order along a shaft length direction of the motor shaft in the motor. The members include the motor; a wiring portion serving as a supply passage for supplying driving electric power to the motor; a heat sink for promoting heat dissipation from the wiring portion and the like; a module for executing a supply operation for supplying the driving electric power to the motor; and a control board for controlling the supply operation for supplying the driving electric power to the motor. The control board is provided so as to be opposed to a shaft end part of the motor shaft.

The control board is provided with electronic components necessary to control and drive the motor. Note that, in a case where a more complicated control is required or securing of redundancy is required for the motor, it may be necessary to increase the number of electronic components to be provided in the control board. In the case where the number of electronic components to be provided in the control board should be increased as described above, if the control board is provided so as to be opposed to the shaft end part of the motor shaft as in JP 2014-057514 A, a board area of the control board is increased in a shaft radial direction of the motor shaft. Accordingly, the size of the motor unit may be increased.

The module is provided with signal terminals projected toward the control board provided so as to be opposed to the end part of the motor shaft, that is, signal terminals projected in the shaft length direction of the motor shaft, so as to transmit and receive signals to and from the control board.

The motor unit is provided with semiconductor elements such as switching elements (the module) necessary to perform a supply operation for supplying driving electric power to the motor. Note that, in a case where a more complicated control is required or securing of the redundancy is required for the motor, it may be necessary to increase the number of semiconductor elements to be provided in the motor unit. In the case where the number of semiconductor elements to be provided in the motor unit should be increased, if the signal terminals of the semiconductor elements are projected in the shaft length direction of the motor shaft as in JP 2014-057514 A, an area on a side where the signal terminals are projected is increased in the shaft radial direction of the motor shaft. Accordingly, the size of the motor unit may be increased in the shaft radial direction of the motor shaft.

Further, conventionally, for example, a motor unit (a driving device) described in Japanese Patent Application Publication No. 2011-176999 (JP 2011-176999 A) is proposed as a motor unit in which a motor including a rotatable motor shaft and a control board configured to control and drive the motor by supplying driving electric power to the motor are unitized. In the motor unit of JP 2011-176999 A, a wiring portion serving as a supply passage for supplying driving electric power to the motor and a module are provided along a motor shaft in the motor. In the module, semiconductor elements that perform a supply operation for supplying the driving electric power to the motor via the wiring portion are integrated. A heat sink that promotes heat dissipation from the wiring portion and the module is provided so as to be sandwiched between the wiring portion and the module.

In order to connect the wiring portion to the module, the wiring portion described in JP 2011-176999 A serving as the supply passage should have at least a length that allows the wiring portion to step over the heat sink. In the wiring portion, as its length, that is, the supply passage for supplying the driving electric power to the motor is longer, an occurrence of noise such as surge current (voltage) in the plurality of semiconductor elements of the module is increased. This may increase heat generation in the plurality of semiconductor elements of the module. Therefore, it is desirable to restrain heat generation by shortening the supply passage for supplying the driving electric power to the motor as much as possible.

### SUMMARY OF THE INVENTION

The present invention provides a motor unit that can be restrained from increasing in size.

Further, the present invention provides a motor unit that can be restrained from increasing in size in a shaft radial direction of a motor shaft.

Further, the present invention provides a motor unit in which heat generation in a plurality of semiconductor elements can be restrained.

A motor unit according to an aspect of the present invention includes a motor that includes a rotatable motor shaft; and a control board configured to execute a control to drive the motor. The control board includes a first control board and a second control board each having a mounting space in which to provide at least one electronic component necessary to control and drive the motor. The first control board is provided such that the mounting space for the at least one electronic component perpendicularly intersects with an extension line extending from a shaft end part of the motor shaft and extends along a shaft radial direction of the motor shaft so as to allow the at least one electronic component to be disposed along the shaft radial direction of the motor shaft. The second control board is provided such that the mounting space for the at least one electronic component extends along a shaft length direction of the motor shaft so as to allow the at least one electronic component to be disposed along the shaft length direction of the motor shaft. The motor and the control board are unitized.

In the above configuration, when at least one electronic component is provided on the control board, the at least one electronic component can be disposed along the shaft length direction of the motor shaft due to the mounting space of the second control board, and the at least one electronic component can be disposed on a plane that perpendicularly intersects with the extension line extending from the shaft end part of the motor shaft due to the mounting space of the first control board. That is, in this case, even in a case where the number of electronic components to be provided on the control board should be increased, the electronic components can be dispersedly provided along the shaft length direction of the motor shaft and on a plane that perpendicularly intersects with the extension line extending from the shaft end part of the motor shaft. Accordingly, it is possible to restrain an increase in the size of the motor unit in the shaft radial direction of the motor shaft (a direction perpendicular to a plane including the motor shaft) and in the shaft length direction of the motor shaft. That is, it is possible to restrain an increase in the size of the motor unit itself.

For example, in a case where a brushless motor is employed as the motor, the motor is controlled and driven with use of the rotation angle of the motor. Note that the rotation angle of the motor is calculated with use of a physical amount that changes according to rotational movement of the motor. In general, the physical amount depends on the rotation of the motor shaft that rotates with the rotational movement of the motor. Further, with regard to at least one electronic component serving as an operation controlling portion that executes a control to drive the motor, it is convenient for the at least one electronic component to be disposed closer to the motor.

The at least one electronic component provided on the first control board may include at least one electronic control component serving as a calculation controlling portion that is configured to calculate a rotation angle of the motor with use of a physical amount that changes according to rotational movement of the motor; and the at least one electronic component provided on the second control board may include at least one electronic component serving as an operation controlling portion that is configured to execute the control to drive the motor with use of a calculation result obtained by the calculation controlling portion.

That is, in the above configuration, since functions are assigned to the control boards that are convenient for the functions, respectively, it is possible to restrain an occurrence of a dead space relating to mounting of the electronic components, and it is possible to restrain an increase in the size of the motor unit itself.

According to the aspect of the present invention, it is possible to restrain an increase in the size of the motor unit.

A motor unit according to another aspect of the present invention includes a motor that includes a rotatable motor shaft; a module that includes a plurality of semiconductor elements and is configured to perform a supply operation for supplying driving electric power to the motor; and a control board configured to control the supply operation for supplying the driving electric power to the motor by controlling the module. The module includes a plurality of signal terminals that transmits and receives signals to and from the control board. In the module, the plurality of signal terminals is disposed along a shaft length direction of the motor shaft, and the plurality of signal terminals is extended in a direction perpendicular to a plane including the motor shaft. The motor, the module including the plurality of semiconductor elements, and the control board are unitized.

In the above configuration, when the module including the plurality of semiconductor elements is provided in the motor unit, the plurality of signal terminals is extended in the direction perpendicular to a plane including the motor shaft (i.e., the shaft radial direction of the motor shaft). Further, even in a case where the number of signal terminals of the semiconductor elements should be increased due to an increase in the number of semiconductor elements to be provided in the motor unit, the signal terminals are disposed along the shaft length direction, and not along the shaft radial direction of the motor shaft. This makes it possible to restrain an increase in an arrangement area for these terminals in the shaft radial direction of the motor shaft. That is, in this case, although the number of signal terminals of the semiconductor elements to be provided in the motor unit is increased, it is possible to restrain an increase in the size of the motor unit in the shaft radial direction of the motor shaft.

A plurality of semiconductor elements may be integrated in the module, and the module may have a rectangular shape with long sides and short sides; a heat sink that promotes heat dissipation from the module may be provided between the motor shaft and the module; and the module may be provided such that a long-side direction of the module extends along the shaft length direction of the motor shaft.

As described above, when the plurality of signal terminals is extended from a side along the longitudinal direction of the module in which the plurality of semiconductor elements is integrated, it is possible to reduce the size of the module in the shaft radial direction of the motor shaft. Accordingly, the module can be disposed more outward in the shaft radial direction of the motor shaft. That is, in the above configuration, it is possible to increase the capacity of the heat sink that can be provided between the motor shaft and the module, thereby making it possible to achieve high heat dissipation from the module.

Furthermore, the control board may be provided to extend along the shaft length direction of the motor shaft so as to extend along the plurality of signal terminals of the module. In the above configuration, when the module is connected so as to transmit and receive signals to and from the control board, the plurality of signal terminals of the module and the control board are provided so as to be as close to each other as possible. That is, in this case, it is possible to shorten the signal terminals of the module as much as possible, thereby making it possible to restrain an increase in the size of the motor unit itself.

Electronic components having various functions are provided on the control board in the motor unit, and the electronic components include at least one electronic component serving as an operation controlling portion configured to control a supply operation for supplying driving electric power to the motor by controlling the module. As the at least one electronic component serving as the operation controlling portion is disposed closer to the module to be controlled, the signal terminals of the module can be made shorter.

That is, at least one electronic component serving as an operation controlling portion configured to control a supply operation for supplying driving electric power to the motor may be provided on the control board; and each of the control board and the module may be provided to extend along the motor shaft, and the control board and the module may be provided so as to be adjacent to each other.

In the above configuration, the module and the operation controlling portion are disposed so as to be adjacent to each other such that the module and the operation controlling portion are disposed as close to each other as possible. That is, in this case, the module is connected to the operation controlling portion by relatively short terminals, thereby making it possible to restrain an increase in the size of the motor unit itself.

According to the above aspect of the present invention, it is possible to restrain an increase in the size of the motor unit in the shaft radial direction of the motor shaft.

A motor unit according to another aspect of the present invention includes a motor that includes a rotatable motor shaft; a wiring portion serving as a supply passage for supplying driving electric power to the motor; a plurality of semiconductor elements that performs a supply operation for supplying the driving electric power to the motor via the wiring portion; a control board configured to control the supply operation for supplying the driving electric power to the motor by controlling the plurality of semiconductor elements; and a motor housing that accommodates a unit including the motor, the wiring portion, the plurality of semiconductor elements, and the control board. The motor, the wiring portion, the plurality of semiconductor elements, and the control board are unitized. Each of the plurality of semiconductor elements is provided to extend along a shaft length direction of the motor shaft, and the plurality of semiconductor elements is provided so as to be adjacent to the wiring portion. In the motor housing, the wiring portion and the plurality of semiconductor elements are provided outside a heat sink in a shaft radial direction of the motor shaft, and the heat sink promotes heat dissipation from the wiring portion and the plurality of semiconductor elements.

In the above configuration, the heat sink is provided on inner peripheral sides of the wiring portion and the plurality of semiconductor elements. Since the wiring portion and the plurality of semiconductor elements can be disposed adjacent to each other, the connection therebetween can be prevented from being interrupted by the heat sink and the like, for example. Thus, since the connection between the wiring portion and the plurality of semiconductor elements does not need to step over the heat sink, it is possible to shorten at least terminals and the like (the supply passage) relating to the connection, as compared to a case where the connection between the wiring portion and the plurality of semiconductor elements is made with the heat sink being sandwiched therebetween as described in JP 2011-176999 A, for example. That is, in this case, it is possible to reduce an occurrence of noise such as a surge current (voltage) in the plurality of semiconductor elements, thereby making it possible to restrain heat generation in the plurality of semiconductor elements.

The wiring portion and the plurality of semiconductor elements may be arranged side by side in a circumferential direction of the motor shaft. In the above configuration, the wiring portion and the plurality of semiconductor elements are provided so as to be adjacent to each other, and each of the wiring portion and the plurality of semiconductor elements is provided to extend along the shaft length direction of the motor shaft. That is, in this case, with regard to the wiring portion and the plurality of semiconductor elements, spaces for providing the wiring portion and the plurality of semiconductor elements can be preferably (appropriately) secured, as compared to a case where they are arranged in the shaft length direction of the motor shaft. Accordingly, it is possible to increase flexibility in the design of a layout in which the terminals (the supply passage) related to the wiring portion are shortened. Thus, it is possible to appropriately restrain heat generation in the plurality of semiconductor elements.

According to the above aspect, it is possible to restrain heat generation in the plurality of semiconductor elements.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view illustrating an outline of a motor unit;
FIG. 2 is a perspective view illustrating a heat sink in the motor unit;
FIG. 3 is a perspective view illustrating the heat sink seen from a side opposite to a side from which the heat sink is seen in FIG. 2;
FIG. 4 is a view illustrating the motor unit, and particularly a perspective view illustrating a motor controller;
FIG. 5 is a perspective view illustrating the motor controller seen from a side opposite to a side from which the motor controller is seen in FIG. 4;
FIG. 6 is a view illustrating the motor controller, and particularly a front view illustrating a wiring portion;
FIG. 7 is a view illustrating the motor controller, and particularly a front view illustrating a module;
FIG. 8 is a view illustrating the motor controller, and particularly a front view illustrating an operation control board;
FIG. 9 is a front view illustrating the motor controller from above;
FIG. 10 is a front view illustrating a motor unit including a two-system control system in another example;
FIG. 11 is a perspective view illustrating the motor unit seen in a direction different from a direction in which the motor unit is seen in FIG. 10;
FIG. 12 is a view schematically illustrating a heat sink in another example;
FIG. 13 is a view schematically illustrating a heat sink in another example; and
FIG. 14 is a view schematically illustrating a heat sink in another example.

### DETAILED DESCRIPTION OF EMBODIMENTS

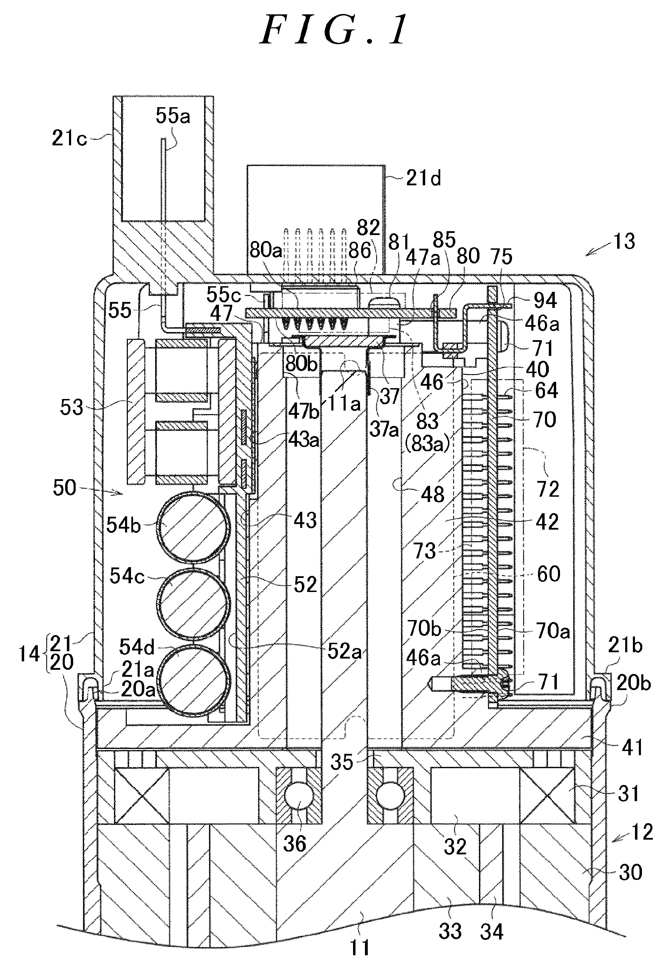

A motor unit according to an embodiment of the invention will be described below. As illustrated in FIG. 1, the motor unit includes a motor 12 that includes a rotatable motor shaft 11 and is operated when driving electric power is supplied to the motor 12, and a motor controller 13 that can execute a control to drive the motor 12. The motor 12 and the motor controller 13 are accommodated in a common motor housing 14 so as to be unitized. As will be described later, main constituents of the motor controller 13 include a wiring portion 50, a module 60, an operation control board 70, and a calculation control board 80. Note that the motor unit of the present embodiment is provided in an electric power steering apparatus of a vehicle, for example. The electric power steering apparatus controls the motor unit so as to generate an assist torque in accordance with a steering torque at the time when a driver of the vehicle operates a steering wheel.

As illustrated in FIG. 1, the motor housing 14 includes a cylindrical stator housing 20 having an opening 20a, and the opening 20a of the stator housing 20 is closed by a cylindrical cover 21 having an opening 21a. That is, the motor housing 14 is formed (configured) by causing the stator housing 20 and the cover 21 to face each other and fitting the stator housing 20 and the cover 21 to each other so as to close the respective openings 20a, 21a. Note that, the motor housing 14 is formed (configured) by engaging a plurality of (four, in the present embodiment) engageable portions 20b formed in a peripheral edge around the opening 20a in the stator housing 20 with a plurality of (four, in the present embodiment) engageable lugs 21b formed in a peripheral edge around the opening 21a in the cover 21.

As illustrated in FIG. 1, the motor 12 constituted by a stator 30, a rotor 33, and the like is accommodated in the stator housing 20. That is, the cylindrical stator 30 in which a plurality of teeth is formed is fixed to an inner periphery of the stator housing 20. A motor coil 31 is wound around each of the teeth of the stator 30 via an insulator. A leading line serving as a connection end portion of the motor coil 31 is connected to a motor side bus bar 32 of a corresponding phase (a corresponding phase among three phases, a U phase, V phase, and a W phase).

On an inner peripheral side of the stator 30, a cylindrical rotor 33 rotating together with the motor shaft 11 in an integrated manner is fitted to an outer periphery of the motor shaft 11. A plurality of permanent magnets 34 formed in a rectangular plate shape is fixed to the outer periphery of the rotor 33. The permanent magnets 34 with different polarities (an N pole, an S pole) are arranged alternately in a circumferential direction of the rotor 33.

A rotor housing 35 is fitted in the stator housing 20 from the opening-20a side with respect to the stator 30 and the rotor 33. The rotor housing 35 has a function of stopping the stator 30 and the rotor 33 inside the stator housing 20 and a function of fixing a bearing 36 that supports the motor shaft 11 such that the motor shaft 11 is rotatable.

Note that the stator 30, the motor coil 31, the motor side bus bar 32, the rotor 33, the permanent magnets 34, and the rotor housing 35 are constituents of the motor 12. Further, the length of the motor shaft 11 in the motor 12 is set such that a part of the motor shaft 11 extends from the stator housing 20 into the cover 21. A detection magnet 37 is attached, via a fixture 37a, to a shaft end part 11a of the motor shaft 11, the shaft end part 11a being located in a side of the motor shaft 11, which extends inside the cover 21. The detection magnet 37 serves as a magnetic force generation portion that generates a magnetic force (a physical amount) used to calculate a rotation angle of the rotor 33 (the motor 12). A change of the magnetic force generated by the detection magnet 37 is detected by a magnetic sensor 83a (described later) provided so as to be opposed to the detection magnet 37.

In the motor 12, a three-phase driving electric power in accordance with the rotation angle calculated with use of a detection result obtained by the magnetic sensor 83a is supplied to each motor coil 31 so that a rotating magnetic field is generated. The rotor 33 rotates based on a relationship between the rotating magnetic field thus generated in the motor 12 and each permanent magnet 34.

As illustrated in FIGS. 1, 4, and 5, the motor controller 13 is accommodated in the cover 21. Note that, in a side opposite to the opening 21a in the cover 21, a power supply connector 21c connected to an external power supply and a plurality of (two, in the present embodiment) control connectors 21d connected to an external controlling portion are formed.

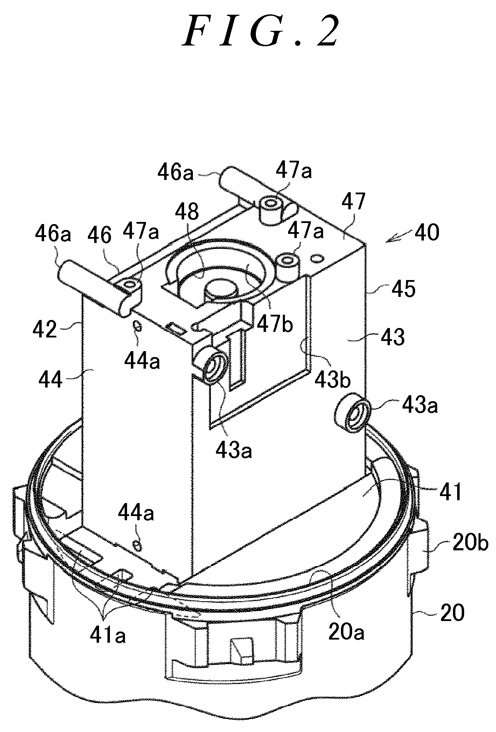

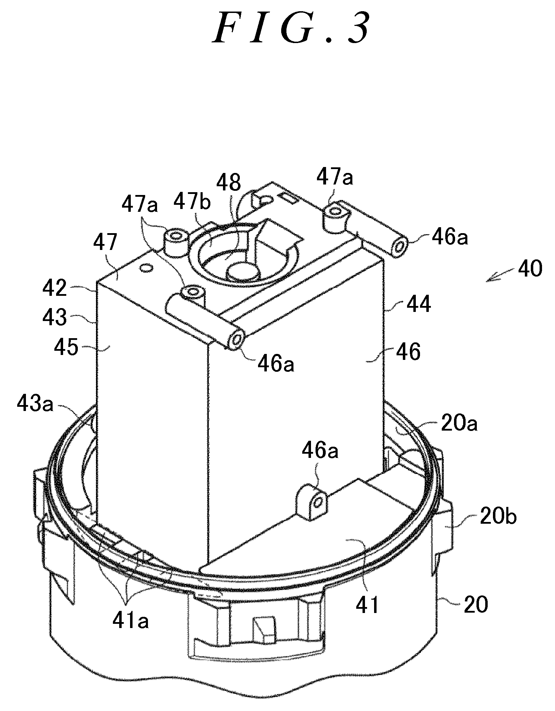

The following describes the motor controller 13 in detail. As illustrated in FIGS. 1 to 3, the motor controller 13 includes a heat sink 40 serving as a base on which constituents of the motor controller 13 are provided and having a function of promoting heat dissipation from the motor controller 13. The heat sink 40 includes a foundation portion 41 set to have a diameter slightly larger than a diameter of the opening 20a of the stator housing 20. A mounting portion 42 having a rectangular parallelepiped shape is provided in the foundation portion 41 in a standing manner to extend from a center of the foundation portion 41 toward a side opposite to the motor 12. The mounting portion 42 is provided with a plurality of (five, in the present embodiment) mounting surfaces 43 to 47 on which the constituents of the motor controller 13 can be provided. Further, the foundation portion 41 is provided with communicating openings 41a on an outer periphery of the foundation portion 41 such that the communicating openings 41 a provide communication between a surface and a reverse surface of the foundation portion 41. The communicating openings 41a are provided in front of each of the mounting surfaces 44,45.

A through hole 48 into which the motor shaft 11 is inserted is formed inside the heat sink 40. The through hole 48 extends from the motor 12-side of the foundation portion 41 and communicates with an opening recessed portion 47b. The opening recessed portion 47b is formed on the flat mounting surface 47 parallel to the foundation portion 41, among the mounting surfaces 43 to 47.

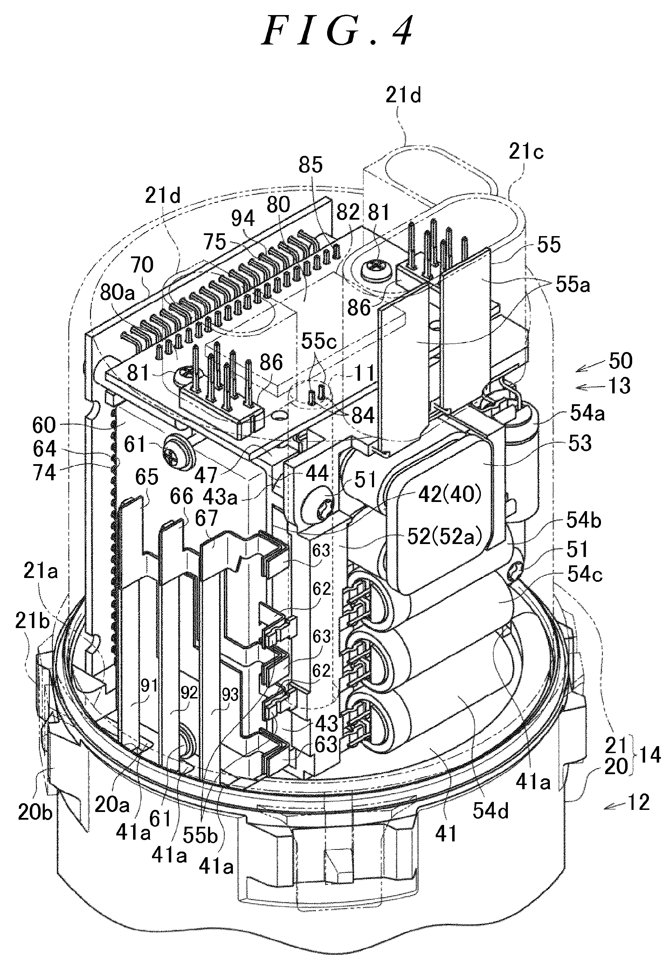

As illustrated in FIG. 4, the wiring portion 50 (a constituent of the motor controller 13) serving as a supply passage for supplying driving electric power to the motor 12 is provided on the mounting surface 43 which is a planar mounting surface perpendicularly intersecting with the foundation portion 41 and which has a relatively large surface area, such that the wiring portion 50 is disposed outside the motor shaft 11 in the shaft radial direction of the motor shaft 11 (which hereinafter indicates a "direction perpendicular to a plane including the motor shaft 11"). The wiring portion 50 is fixed, in an abutting state, to the mounting surface 43, that is, the heat sink 40 so as to directly make contact with the mounting surface 43 (the heat sink 40), by screws 51 inserted into two fixed portions 43a formed on the mounting surface 43, via a base plate 52 made of resin and having a rectangular shape with long sides and short sides. The wiring portion 50 secures contact with the heat sink 40 with the heat sink 40 being sandwiched between the wiring portion 50 and the motor shaft 11. Note that a mounting recessed portion 43b is formed on the mounting surface 43 so as to place wiring electronic components (described later) as close to the heat sink 40 as possible.

Further, as illustrated in FIG. 4, a module 60 (a constituent of the motor controller 13) that performs a supply operation for supplying driving electric power to the motor 12 and has a rectangular shape with long sides and short sides is provided on the mounting surface 44 which is a planar mounting surface perpendicularly intersecting with the foundation portion 41 and has a relatively small surface area, such that the module 60 is disposed outside the motor shaft 11 in the shaft radial direction. The module 60 is fixed, in an abutting state, to the mounting surface 44, that is, the heat sink 40 so as to directly make contact with the mounting surface 44 (the heat sink 40), by screws 61 inserted into two screw holes 44a formed on the mounting surface 44. The module 60 secures contact with the heat sink 40 with the heat sink 40 being sandwiched between the module 60 and the motor shaft 11, and the module 60 and the wiring portion 50 are arranged so as to be adjacent to each other in a circumferential direction of the motor shaft 11 due to a positional relationship among the mounting surfaces 43 to 47 in the mounting portion 42.

Note that the planar mounting surface 45 opposed to the mounting surface 44 is a vacant space in which no constituent of the motor controller 13 is provided. The mounting surface 45 is regarded as a space that can be used to add a constituent of the motor controller 13, for example, when a new function is added to the motor unit or redundancy is secured.

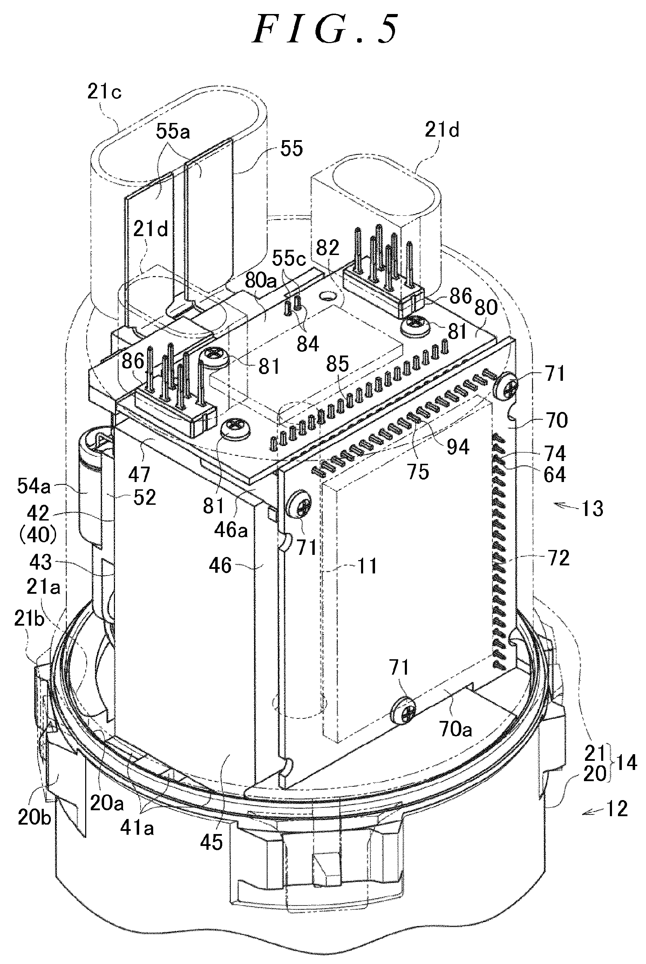

Further, as illustrated in FIG. 5, the operation control board 70 (a constituent of the motor controller 13) that controls the operation of the module 60 and has a rectangular shape with long sides and short sides is provided in the vicinity of the mounting surface 46 which is a planar mounting surface connecting the mounting surface 44 to the mounting surface 45 and which has a relatively large surface area, such that the operation control board 70 is disposed outside the motor shaft 11 in the shaft radial direction. In the present embodiment, the operation control board 70 functions as a second control board, and at least one electronic component provided on the operation control board 70 functions as an operation controlling portion. The operation control board 70 is fixed to the mounting surface 46, that is, the heat sink 40 by screws 71 inserted into two fixed portions 46a formed on the mounting surface 46. That is, the operation control board 70 is fixed such that there is a prescribed distance between the operation control board 70 and the mounting surface 46 (the heat sink 40). The operation control board 70 secures a distance from the heat sink 40 with the heat sink 40 being sandwiched between the operation control board 70 and the motor shaft 11, and the operation control board 70 and the module 60 are arranged side by side so as to be adjacent to each other in the circumferential direction of the motor shaft 11 due to the positional relationship among the mounting surfaces 43 to 47 in the mounting portion 42.

Further, as illustrated in FIGS. 4 and 5, the calculation control board 80 (a constituent of the motor controller 13) having a rectangular shape with long sides and short sides is provided in the vicinity of the aforementioned mounting surface 47 formed with a relatively small surface area such that the calculation control board 80 is disposed on a plane that perpendicularly intersects with an extension line extending from the shaft end part 11 a of the motor shaft 11. The calculation control board 80 calculates the rotation angle of the rotor 33 as information that is necessary at the time when the operation control board 70 controls the operation of the module 60. In the present embodiment, the calculation control board 80 functions as a first control board, and at least one electronic component provided on the calculation control board 80 functions as a calculation controlling portion. The calculation control board 80 is fixed to the mounting surface 47, that is, the heat sink 40 by screws 81 inserted into fixed portions 47a formed on the mounting surface 47. The calculation control board 80 is fixed such that there is a prescribed distance between the calculation control board 80 and the mounting surface 47 (the heat sink 40). The calculation control board 80 secures a distance from the heat sink 40, and the heat sink 40 is sandwiched between the calculation control board 80 and the motor shaft 11. Further, the calculation control board 80 is arranged adjacent to the wiring portion 50, the module 60, and the operation control board 70 due to the positional relationship among the mounting surfaces 43 to 47 in the mounting portion 42.

Further, with regard to a relationship between the operation control board 70 and the calculation control board 80, the operation control board 70 is disposed closer to the motor 12 to be controlled than the calculation control board 80 is, due to a relationship of the mounting surfaces on which the operation control board 70 and the calculation control board 80 are provided (due to a shape of the heat sink 40). Further, in this case, the calculation control board 80 is disposed closer to the detection magnet 37 to be detected (the shaft end part 11a of the motor shaft 11) than the operation control board 70 is.

By press-fitting the foundation portion 41 to the opening 20a of the stator housing 20 in which the motor 12 is accommodated, the heat sink 40 is fitted such that an outer periphery of the foundation portion 41 makes contact with an entire circumference of the opening 20a. That is, in this case, since the heat sink 40 is fitted to the stator housing 20 in an integrated manner, its heat dissipation operation is improved as compared with a case where the heat sink 40 is provided singularly.

Note that, in a state where the heat sink 40 is fitted to the stator housing 20, the detection magnet 37 attached to the shaft end part 11a of the motor shaft 11 is accommodated in the opening recessed portion 47b. Further, an inside of the stator housing 20 communicates with an inside of the cover 21 via the communicating openings 41a of the foundation portion 41.

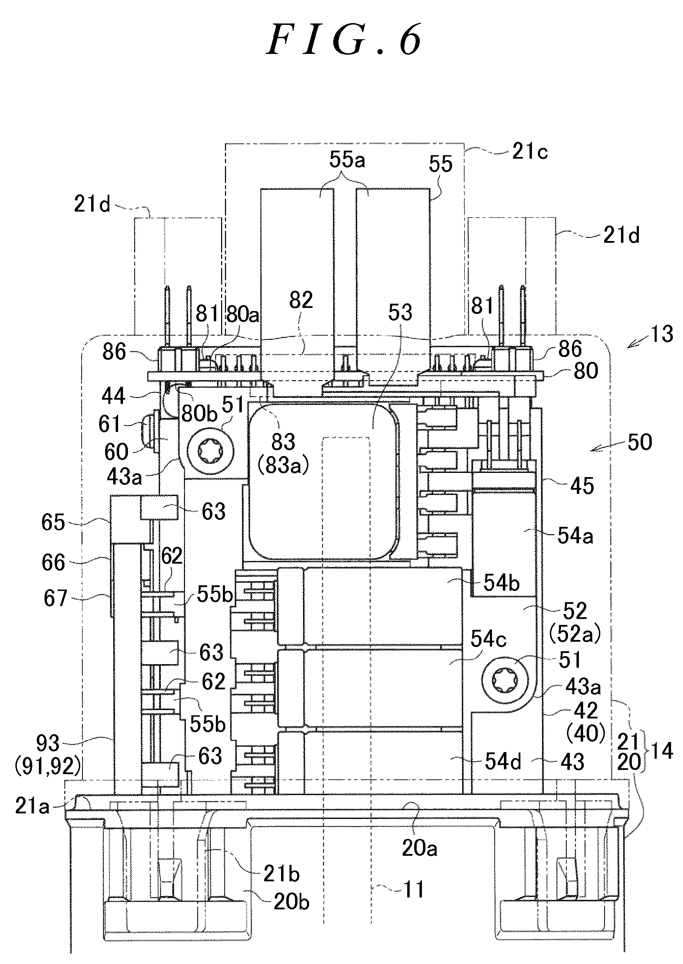

The following describes the configuration of the constituents of the motor controller 13 further in detail. As illustrated in FIGS. 1, 4, and 6, the base plate 52 (the wiring portion 50) is provided such that the long sides thereof (the longitudinal direction thereof) extend along a shaft length direction of the motor shaft 11. The base plate 52 is provided with wiring electronic components. The wiring electronic components include a choke coil 53 that cuts electric power in an extra spectrum in driving electric power supplied from the external power supply so as to reduce noise; and a plurality of (four, in the present embodiment) electrolytic capacitors 54a to 54d that smooths driving electric power supplied from the external power supply so as to reduce noise

The base plate 52 is fixed such that the long sides (the longitudinal direction) of the base plate 52 extend along the shaft length direction of the motor shaft 11, and a mounting space 52a in which the wiring electronic components are provided is formed to be longer in the shaft length direction than in the shaft radial direction of the motor shaft 11. In the mounting space 52a formed as described above, the wiring electronic components are arranged (laid out) in the shaft length direction (along the long side of the base plate 52) rather than the shaft radial direction of the motor shaft 11.

In the wiring portion 50, the external power supply and the choke coil 53, the external power supply and the electrolytic capacitor 54a, the choke coil 53 and each of the electrolytic capacitors 54a to 54d are electrically connected to each other via a power-supply-side bus bar 55. One end of the power-supply-side bus bar 55 extends toward a power supply connector 21c so as to serve as power supply terminals 55a electrically connected to the external power supply. Further, the other end of the power-supply-side bus bar 55 is branched into two. One of them extends toward the mounting surface 44 so as to serve as module terminals 55b electrically connected to the module 60, and the other one of them serves as board terminals 55c electrically connected to the calculation control board 80. The other part of the power-supply-side bus bar 55, which is a part other than the power supply terminals 55a, the module terminals 55b, and the board terminals 55c, is fitted to the base plate 52 with use of resin.

As illustrated in FIGS. 1, 4, and 7, the module 60 is provided such that the long sides thereof (the longitudinal direction thereof) extend along the shaft length direction of the motor shaft 11. That is, in this case, the module 60 is provided to extend along the wiring electronic components arranged in the shaft length direction of the motor shaft 11 (that is, along the longitudinal direction of the wiring portion 50). The module 60 is configured as a module in which a plurality of switching elements such as FETs as semiconductor elements is integrated. That is, in the module 60, a driving circuit is constituted by an inverter circuit, a power supply relay circuit, and the like for supplying driving electric power of three phases (the U-phase, the V-phase, and the W-phase) based on the driving electric power supplied from the external power supply.

In the wiring portion 50-side (one side along the longitudinal direction) of the module 60, a plurality of (two, in the present embodiment) wiring terminals 62 each electrically connected to the corresponding module terminal 55b of the wiring portion 50 is extended in the shaft radial direction of the motor shaft 11, and the wiring terminals 62 are arranged along the shaft length direction of the motor shaft 11. Driving electric power is supplied to the driving circuit from the two wiring terminals 62 via the module terminals 55b.

Further, in the wiring portion 50-side of the module 60, in addition to the wiring terminals 62, a plurality of (three, in the present embodiment) phase terminals 63 for supplying driving electric power of respective phases from the driving circuit is extended in the shaft radial direction of the motor shaft 11, and the phase terminals 63 are arranged along the shaft length direction of the motor shaft 11. From the driving circuit, the driving electric power of three phases is supplied to the motor 12 via the respective phase terminals 63.

Further, in the operation control board 70-side (the other side along the longitudinal direction) of the module 60, a plurality of (twenty-two, in the present embodiment) signal terminals 64 that transmits and receives various signals such as control signals to and from the operation control board 70 is extended in the shaft radial direction of the motor shaft 11, and the signal terminals 64 are arranged along the shaft length direction of the motor shaft 11. The driving circuit receives control signals for instructing operations (switching) of the switching elements in the inverter circuit, from the operation control board 70 via the respective signal terminals 64, so that the operation of the driving circuit is controlled. Further, the driving circuit outputs control signals indicative of current values monitored by the inverter circuit, to the operation control board 70 via the respective signal terminals 64.

The module 60 is fixed such that the long sides thereof (the longitudinal direction thereof) extend along the shaft length direction of the motor shaft 11. The wiring terminals 62 and the phase terminals 63 in the wiring portion 50-side and the signal terminals 64 in the operation control board 70-side are extended in the shaft radial direction of the motor shaft 11. That is, in this case, the wiring terminals 62 are arranged (laid out) in the shaft length direction of the motor shaft 11 (along the long side of the module 60), the phase terminals 63 are arranged (laid out) in the shaft length direction of the motor shaft 11, and the signal terminals 64 are arranged (laid out) in the shaft length direction of the motor shaft 11. Accordingly, each of the semiconductor elements provided in the module 60 can be arranged (laid out) to extend in the shaft length direction of the motor shaft 11 (along the long side of the module 60).

Still further, each of the wiring portion 50 and the module 60 is fixed such that the long sides thereof (the longitudinal direction thereof) extend along the shaft length direction of the motor shaft 11, and the wiring portion 50 and the module 60 are adjacent to each other in the heat sink 40 (the mounting portion 42). Accordingly, the wiring portion 50 and the module 60 are electrically connected to each other by relatively short terminals (wirings) without being interrupted by the other constituents of the motor controller 13.

In the module 60, the phase terminals 63 are connected to the corresponding motor side bus bars 32 of respective phases (three phases, that is, the U-phase, the V-phase, and the W-phase) via module bus bars 65, 66, 67 and relay bus bars 91, 92, 93. Note that the relay bus bars 91, 92, 93 enter the stator housing 20 via the communicating openings 41a of the foundation portion 41, so as to be connected to the corresponding motor side bus bars 32 inside the stator housing 20.

In the module 60, the phase terminal 63 disposed closest to the calculation control board 80 (that is, an uppermost one in FIG. 4) is electrically connected to the module bus bar 65, and also electrically connected to the corresponding motor side bus bar 32 via the relay bus bar 91. Further, the phase terminal 63 disposed second closest to the calculation control board 80 (that is, a second one from the top in FIG. 4) is electrically connected to the module bus bar 66, and also electrically connected to the corresponding motor side bus bar 32 via the relay bus bar 92. Further, the phase terminal 63 disposed farthest from the calculation control board 80 (that is, a lowermost one in FIG. 4) is electrically connected to the module bus bar 67, and also electrically connected to the corresponding motor side bus bar 32 via the relay bus bar 93.

As illustrated in FIGS. 1, 5, and 8, the operation control board 70 is provided such that the long sides thereof (the longitudinal direction thereof) extend along the shaft length direction of the motor shaft 11. That is, in this case, the operation control board 70 is provided to extend along the signal terminals 64 arranged in the shaft length direction of the motor shaft 11 (i.e., along the longitudinal direction of the module 60). Further, control electronic components 72, 73 such as a microprocessor and a ROM are provided on the operation control board 70 (on a surface and a reverse surface of the operation control board 70). Thus, a control circuit is configured. The control circuit controls the operation of the module 60 (the driving circuit) by calculating or outputting various control signals. Thus, the control electronic component should be also provided on the heat sink 40-side of the operation control board 70. Therefore, the operation control board 70 is fixed at a prescribed distance from the heat sink 40 to allow the control electronic component 73 to be provided between the operation control board 70 and the heat sink 40.

In the module 60-side (one side along the longitudinal direction) of the operation control board 70, the same number of (twenty-two, in the present embodiment) terminal holes 74 as the number of signal terminals 64 are provided such that the signal terminals 64 of the module 60 are inserted therein so as to achieve electrical connection. The operation control board 70 receives the control signals indicative of current values in the driving circuit (the inverter circuit and the like) from the module 60 via the respective signal terminals 64, and outputs the control signals for instructing operations (switching) of the switching elements in the driving circuit (the inverter circuit and the like), to the module 60 via the respective signal terminals 64.

Further, in the calculation control board 80-side (a side along a short-side direction) of the operation control board 70, the same number of (nineteen, in the present embodiment) terminal holes 75 as the number of connecting terminals 94 is provided such that the plurality of (nineteen, in the present embodiment) connecting terminals 94 is inserted therein so as to transmit and receive various signals such as control signals to and from the calculation control board 80. The operation control board 70 controls the operation of the module 60 by receiving a control signal from the external controlling portion and a control signal indicative of the rotation angle of the motor 12 from the calculation control board 80 via the respective connecting terminals 94. Further, the driving electric power is supplied to the operation control board 70 from the board terminals 55c via the connecting terminals 94.

The operation control board 70 is fixed such that the long sides thereof (the longitudinal direction thereof) extend along the shaft length direction of the motor shaft 11. The mounting space 70a in which the control electronic component 72 is provided on a surface side (a side opposite to the heat sink 40) is formed to be longer in the shaft length direction than in the shaft radial direction of the motor shaft 11. Further, in this case, the mounting space 70b in which the control electronic component 73 is provided on a reverse surface side (the heat sink 40-side) is formed to be longer in the shaft length direction than in the shaft radial direction of the motor shaft 11. In the mounting spaces 70a, 70b formed as described above, individual components of the control electronic components 72, 73 are arranged (laid out) to extend in the shaft length direction (along the long side of the operation control board 70) rather than the shaft radial direction of the motor shaft 11.

Still further, the module 60 and the operation control board 70 are fixed such that their long sides (the longitudinal direction) extend along the shaft length direction of the motor shaft 11, and the module 60 and the operation control board 70 are adjacent to each other in the heat sink 40 (the mounting portion 42). Accordingly, the module 60 and the operation control board 70 are electrically connected to each other by relatively short terminals (wirings) without being interrupted by the other constituents of the motor controller 13.

As illustrated in FIGS. 1, 7, and 9, the calculation control board 80 is provided such that its long side (the longitudinal direction) perpendicularly intersects with an extension line extending from the shaft end part 11 a of the motor shaft 11 and the shaft length direction of the motor shaft 11. That is, the calculation control board 80 is provided along the shaft radial direction of the motor shaft 11. Control electronic components 82, 83 such as a microprocessor and a ROM are provided on the calculation control board 80 (on a surface and a reverse surface of the calculation control board 80). Thus, a control circuit is configured. The control circuit calculates the rotation angle of the motor 12 and outputs, to the operation control board 70, the control signal indicative of the rotation angle obtained from the calculation result. Thus, the control electronic component should be also provided on the heat sink 40-side of the calculation control board 80. Therefore, the calculation control board 80 is fixed at a prescribed distance from the heat sink 40 to allow the control electronic component 83 to be provided between the calculation control board 80 and the heat sink 40.

As the control electronic component 83 provided on the heat sink 40-side of the calculation control board 80 of the present embodiment, that is, on a side thereof close to the detection magnet 37 attached to the shaft end part 11a of the motor shaft 11, the magnetic sensor 83a that detects a change of a magnetic force generated by the detection magnet 37 with use of a magnetoresistance element is provided. That is, the calculation control board 80 calculates the rotation angle of the motor 12 with use of the detection result obtained by the magnetic sensor 83a. Note that a magnetic shielding plate is fixed around the magnetic sensor 83a in the calculation control board 80, so that the magnetic sensor 83a is unlikely to be affected by a magnetic force other than the magnetic force generated by the detection magnet 37.

In the wiring portion 50-side (one side along the longitudinal direction) of the calculation control board 80, a plurality of (two, in the present embodiment) terminal holes 84 is provided such that the board terminals 55c of the wiring portion 50 are inserted therein so as to achieve electrical connection. The driving electric power is supplied to the calculation control board 80 via the board terminals 55c.

Further, in the operation control board 70-side (the other side along the longitudinal direction) of the calculation control board 80, the same number of (nineteen, in the present embodiment) terminal holes 85 as the number of connecting terminals 94 are provided such that the connecting terminals 94 are inserted therein so as to achieve electrical connection. The calculation control board 80 outputs a control signal indicative of the rotation angle of the motor 12 to the operation control board 70 via each connecting terminal 94. Further, the calculation control board 80 supplies the driving electric power to the operation control board 70 via each connecting terminal 94.

Further, external connection terminals 86 that achieve electric connection with the external controlling portion are provided on respective sides of the calculation control board 80 along its short-side direction. That is, the calculation control board 80 can transmit and receive a control signal to and from the external controlling portion via each of the external connection terminals 86.

The calculation control board 80 is fixed such that its long side (the longitudinal direction) perpendicularly intersects with the extension line extending from the shaft end part 11 a of the motor shaft 11 and the shaft length direction of the motor shaft 11. The mounting space 80a in which the control electronic component 82 is provided on a surface side (a side opposite to the heat sink 40) is formed to extend in the shaft radial direction, instead of the shaft length direction of the motor shaft 11. Further, in this case, the mounting space 80b in which the control electronic component 83 including the magnetic sensor 83a is provided on a reverse surface side (the heat sink 40-side) is formed to extend in the shaft radial direction, instead of the shaft length direction of the motor shaft 11. In the mounting spaces 80a, 80b formed as described above, individual components of the control electronic components 82, 83 (the magnetic sensor 83a) are arranged (laid out) so as to extend in the shaft radial direction (along the long side of the calculation control board 80), instead of the shaft length direction of the motor shaft 11.

Furthermore, the wiring portion 50, the module 60, the operation control board 70, and the calculation control board 80 are adjacent to each other in the heat sink 40 (the mounting portion 42), and accordingly, the wiring portion 50, the module 60, the operation control board 70, and the calculation control board 80 are electrically connected to each other by relatively short terminals (wirings) without being interrupted by the other constituents of the motor controller 13.

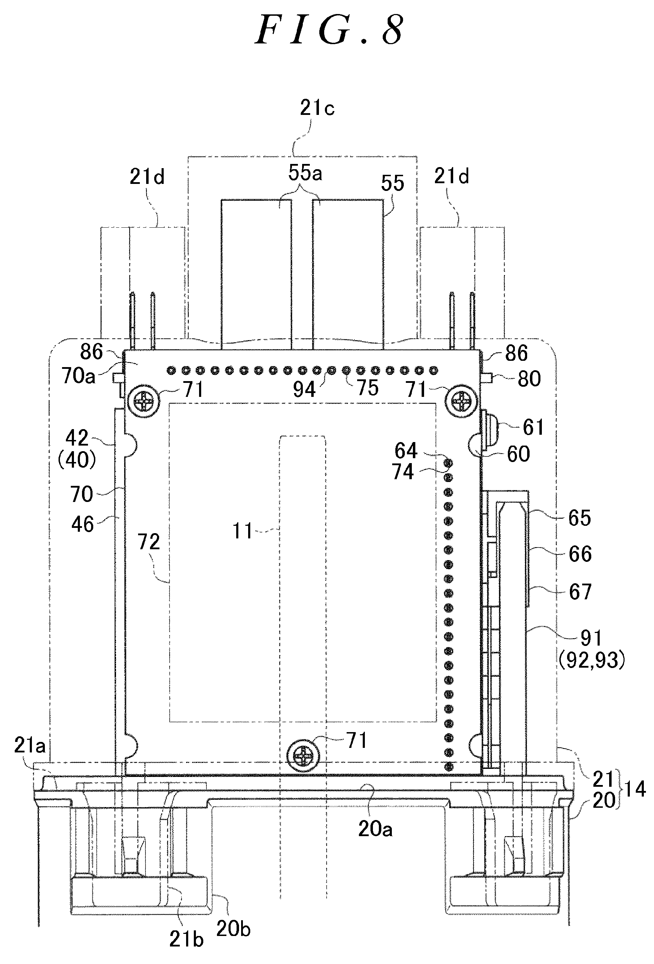

In the motor unit described above, the following operations and effects (1) to (11) can be obtained. (1) As illustrated in FIGS. 1 and 8, according to the present embodiment, when the operation control board 70 is fixed such that the long sides thereof extend along the shaft length direction of the motor shaft 11, the mounting spaces 70a, 70b in which the control electronic components 72, 73 are provided on the operation control board 70 are longer in the shaft length direction than in the shaft radial direction of the motor shaft 11. That is, in this case, the control electronic components 72, 73 provided on the operation control board 70 can be disposed so as to extend in the shaft length direction rather than the shaft radial direction of the motor shaft 11.

Even in a case where the number of control electronic components to be provided on the operation control board 70 should be increased, when the configuration of the present embodiment is used so that the mounting spaces 70a, 70b for the control electronic components are secured to be longer in the shaft length direction than in the shaft radial direction of the motor shaft 11, it is possible to restrain an increase in a board area of the operation control board 70 in the shaft radial direction of the motor shaft 11. That is, in this case, although the number of control electronic components to be provided in the operation control board 70 is increased, it is possible to restrain an increase of the size of the motor unit in the shaft radial direction of the motor shaft 11.

Further, in the present embodiment, when control electronic components are provided in the motor controller 13, the control electronic components can be disposed along the shaft length direction of the motor shaft 11 due to the mounting spaces 70a, 70b, and in addition, the control electronic components can be disposed on a plane that perpendicularly intersects with the extension line extending from the shaft end part 11a of the motor shaft 11, due to the mounting spaces 80a, 80b.

That is, in this case, even in a case where the number of control electronic components to be provided in the motor controller 13 should be increased, the control electronic components can be dispersedly provided in a plane that perpendicularly intersects with the shaft length direction of the motor shaft 11 and the extension line extending from the shaft end part 11 a of the motor shaft 11. Accordingly, it is possible to restrain an increase in the size of the motor unit in the shaft length direction of the motor shaft 11, as well as in the shaft radial direction of the motor shaft 11 (i.e., the direction perpendicular to a plane including the motor shaft 11). That is, it is possible to restrain an increase in the size of the motor unit itself.

(2) In a case where the control board is provided so as to form a mounting space for the control electronic components such that the mounting space perpendicularly intersects with the extension line extending from the shaft end part 11a of the motor shaft 11 and extends along the shaft radial direction of the motor shaft 11, when a control board formed in a round shape can be used, it is possible to maximize the mounting space in the shaft radial direction of the motor unit. That is, this can contribute to restraining an increase in the size of the motor unit in the shaft length direction of the motor shaft 11. However, in a case where a round-shaped control board is manufactured, a large amount of material is wasted, and a yield significantly decreases, as compared to a case where a rectangular control board is manufactured.

In that respect, in the present embodiment, while the operation control board 70 and the calculation control board 80, each of which is formed in a rectangular shape, are used, their arrangements are devised. Thus, it is possible to restrain an increase in cost for manufacturing the control board and to restrain an increase in the size of the motor unit in the shaft length direction of the motor shaft 11.

(3) As illustrated in FIGS. 1 and 5, according to the present embodiment, since the calculation control board 80 disposed closer to the detection magnet 37 (the shaft end part 11a of the motor shaft 11) has a function of calculating the rotation angle of the motor 12, a change of the magnetic force generated by the detection magnet 37 is appropriately detected. Furthermore, since the operation control board 70 disposed closer to the motor 12 has a function of controlling and driving the motor 12, it is possible to appropriately reduce noise or the like at the time when the control is performed with the terminals or the wirings to the motor 12 being set as short as possible.

That is, according to the present embodiment, since the functions are assigned to the control boards that are convenient for the functions, respectively, it is possible to restrain an occurrence of a dead space relating to mounting of the control electronic components, and it is possible to restrain an increase in the size of the motor unit itself.

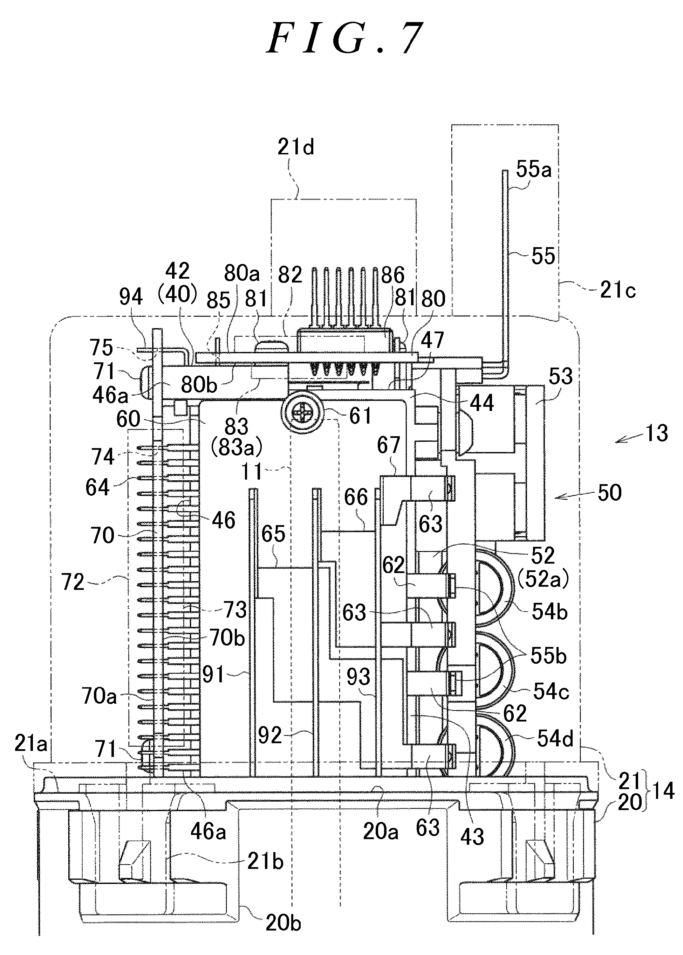

(4) As illustrated in FIGS. 1 and 7, according to the present embodiment, when the module 60 is provided in the motor unit, the signal terminals 64 are extended in the shaft radial direction of the motor shaft 11 (the direction perpendicular to a plane including the motor shaft 11). That is, in this case, the signal terminals 64 of the module 60 (semiconductor elements such as switching elements) provided in the motor unit can be disposed along the shaft length direction of the motor shaft 11.

Further, even in a case where the number of signal terminals of the module 60 should be increased due to an increase in the number of semiconductor elements such as switching elements to be provided in the motor unit, it is possible to restrain an increase in an arrangement area for these terminals in the shaft radial direction of the motor shaft 11, by employing the configuration of the present embodiment in which the signal terminals can be disposed along the shaft length direction of the motor shaft 11. That is, in this case, although the number of signal terminals of the module 60 to be provided in the motor unit is increased, it is possible to restrain an increase in the size of the motor unit in the shaft radial direction of the motor shaft 11.

Note that, in the present embodiment, in addition to the signal terminals 64 of the module 60, the wiring terminals 62 and the phase terminals 63 are also extended in the shaft radial direction of the motor shaft 11 (the direction perpendicular to a plane including the motor shaft 11). Accordingly, it is possible to more appropriately restrain an increase in the size of the motor unit in the shaft radial direction of the motor shaft 11.

(5) As in the present embodiment, when the module 60 is configured such that the wiring terminals 62, the phase terminals 63, and the signal terminals 64 are extended from a side along the longitudinal direction of the module 60, it is possible to reduce the size of the module 60 in the shaft radial direction of the motor shaft 11. Accordingly, the module 60 can be disposed more outward in the shaft radial direction of the motor shaft 11.

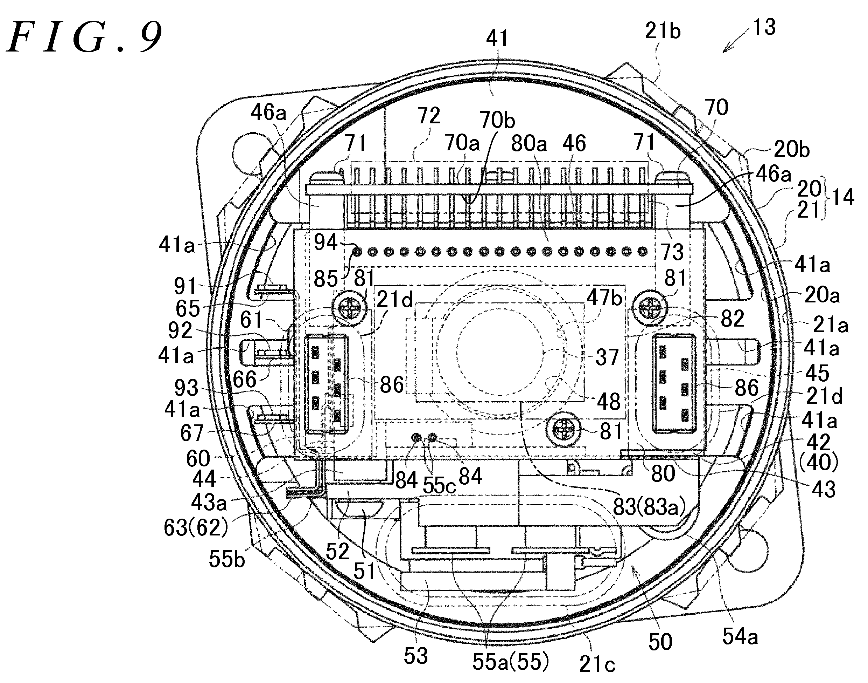

That is, in this case, as illustrated in FIG. 9, it is possible to increase the capacity of the heat sink 40 that can be sandwiched between the motor shaft 11 and the module 60, thereby making it possible to achieve high heat dissipation from the module 60.

(6) As illustrated in FIG. 7, in the present embodiment, the operation control board 70 is fixed to extend along the shaft length direction of the motor shaft 11 so as to extend along the signal terminals 64 of the module 60. That is, in this case, a side of the module 60 on which the signal terminals 64 are projected and a side of the operation control board 70 on which the terminal holes 74 are provided are disposed so as to be opposed to each other. Accordingly, the length of each signal terminal projected from the module 60 can be shortened as much as possible, thereby making it is possible to restrain an increase in the size of the motor unit itself.

(7) As illustrated in FIGS. 8 and 9, in the present embodiment, the module 60 and the operation control board 70 are disposed so as to be adjacent to each other in the heat sink 40 (the mounting portion 42), so that they are disposed as close to each other as possible. That is, in this case, the module 60 is electrically connected to the operation control board 70 by relatively short terminals (wirings), thereby making it possible to restrain an increase of the size of the motor unit itself.

(8) As illustrated in FIG. 4, in the present embodiment, the heat sink 40 (the mounting portion 42) is provided on inner peripheral sides of the wiring portion 50 and the module 60. Further, the wiring portion 50 and the module 60 can be adjacent to each other. Thus, the electric connection between the wiring portion 50 and the module 60 cannot be interrupted by the constituents of the motor controller 13. Thus, in the present embodiment, since the connection between the wiring portion 50 and the module 60 does not need to step over the heat sink 40, it is possible to shorten at least various terminals and the like (a supply passage) related to the connection, as compared to a case where the wiring portion 50 is connected to the module 60 with the heat sink 40 being sandwiched therebetween. That is, in this case, it is possible to reduce an occurrence of noise such as a surge current (voltage) in the module 60, thereby making it possible to restrain heat generation in the module 60.

(9) Further, in the present embodiment, the wiring portion 50 and the module 60 are adjacent to each other in the heat sink 40 (the mounting portion 42), and each of the wiring portion 50 and the module 60 is fixed to extend along the shaft length direction of the motor shaft 11. That is, in this case, with regard to the wiring portion 50 and the module 60, spaces for providing the wiring portion 50 and the module 60 can be preferably (appropriately) secured, as compared to a case where the wiring portion 50 and the module 60 are arranged and fixed side by side in the shaft length direction of the motor shaft 11. Accordingly, it is possible to increase flexibility in design of a layout in which various terminals (a supply passage) related to the wiring portion 50 are shortened. Thus, it is possible to appropriately restrain heat generation in the module 60.

(10) Further, as illustrated in FIG. 1, in the present embodiment in which the wiring portion 50 and the module 60 are provided outside the heat sink 40 in the shaft radial direction, the connection between the motor housing 14 and the heat sink 40 is not interrupted by the wiring portion 50 and the module 60. That is, in this case, the heat sink 40 can make direct contact with the motor housing 14, so that a heat dissipation operation of the heat sink 40 can be promoted, thereby making it possible to restrain heat generation in the module 60.

(11) In a case where the motor 12 is controlled and driven, when the operation control board 70 is compared with the calculation control board 80, the operation control board 70 that substantially controls the module 60 (the driving circuit) generates heat more easily. In view of this, in the present embodiment, the calculation control board 80 is disposed on the mounting surface 47 having a relatively small surface area, whereas the operation control board 70 is disposed on the mounting surface 46 having a relatively large area. This can easily promote heat dissipation from the operation control board 70.

Further, in the present embodiment, in the mounting space 70b in the heat sink 40-side of the operation control board 70, heat dissipation is further easily promoted. That is, in this case, by providing, in the mounting space 70b, a control electronic component that particularly easily generates heat among the control electronic components to be provided in the operation control board 70, it is possible to restrain heat generation in the motor unit.

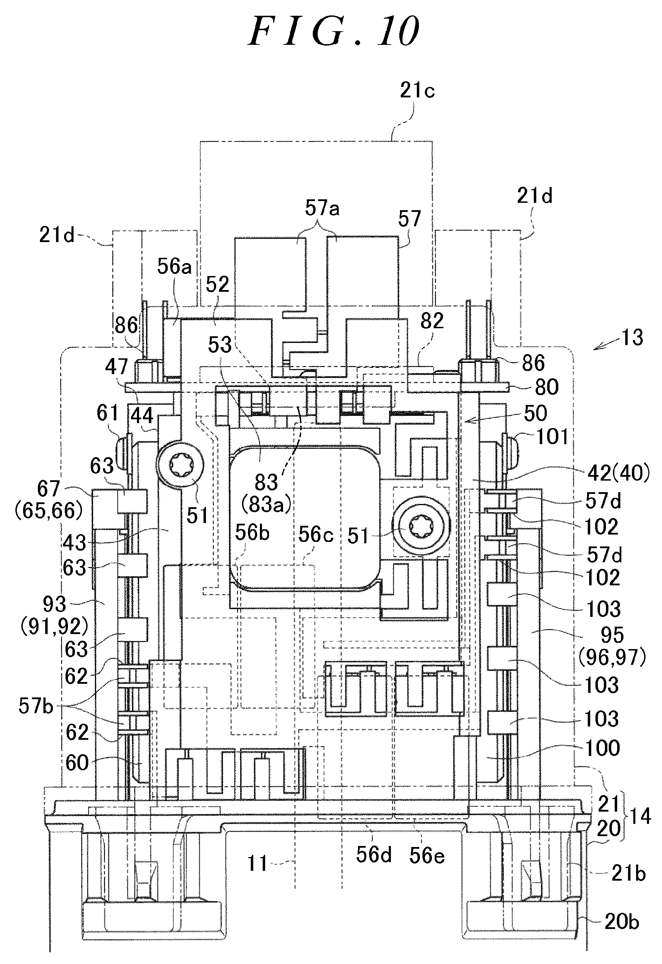

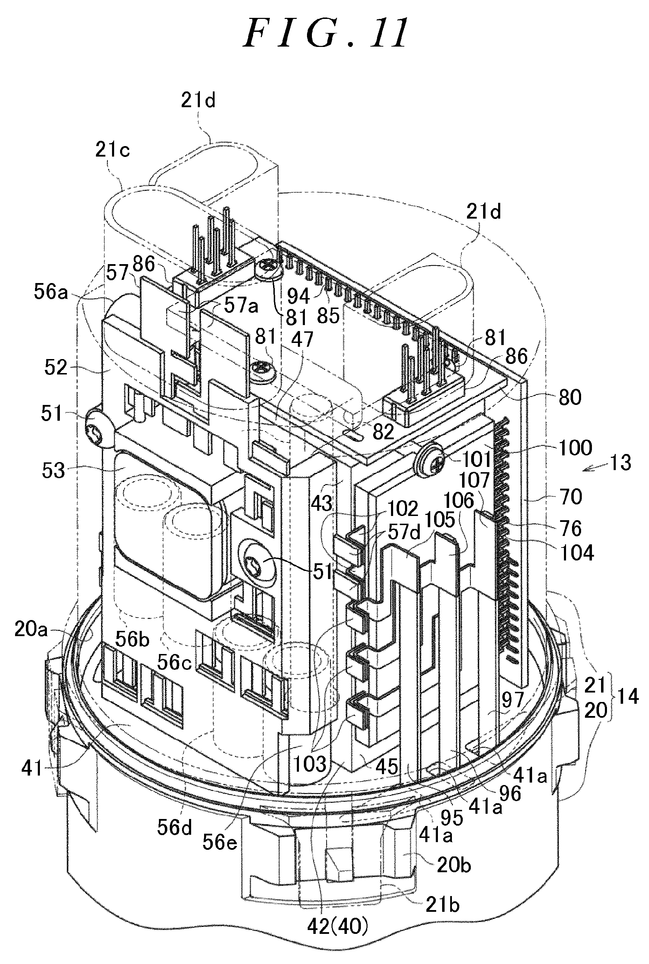

Note that the invention can be realized in the following embodiments in which the above embodiment is modified appropriately. As illustrated in FIGS. 10, 11, a motor unit may include a two-system control system in which an auxiliary module 100 including a backup driving circuit that controls and drives a motor 12 is provided in addition to a module 60. At the time when the module 60 has a failure or the like, an operation control board 70 controls and drives the motor 12 by shifting a control system to the auxiliary module 100 and controlling the driving circuit in the auxiliary module 100. In this case, the auxiliary module 100 has the same configuration as that of the module 60 such that the auxiliary module 100 is fixed by a screw 101, and is electrically connected to the operation control board 70 serving as an operation controlling portion shared with the module 60. The auxiliary module 100 is provided on a mounting surface 45 of a heat sink 40 by a technique that can yield the same effect as the effect of the above embodiment. Note that wiring terminals 62, phase terminals 63, signal terminals 64, module bus bars 65 to 67, and relay bus bars 91 to 93 of the module 60 correspond to wiring terminals 102, phase terminals 103, signal terminals 104, module bus bars 105 to 107, and relay bus bars 95 to 97 of the auxiliary module 100. Further, in the auxiliary module 100 according to this example, like the module 60, the module bus bars 105 to 107 are laid out on a surface side and the relay bus bars 95 to 97 are drawn into a stator housing 20 from communicating openings 41a formed in front of the mounting surface 45 of the heat sink 40. Further, in a wiring portion 50 according to this example, an external power supply and a choke coil 53, an external power supply and an electrolytic capacitor 54a, the choke coil 53 and each of electrolytic capacitors 56a to 56e are electrically connected to each other via a power-supply-side bus bar 57. One end of the power-supply-side bus bar 57 serves as power supply terminals 57a electrically connected to the external power supply. Further, the other end of the power-supply-side bus bar 57 is branched into three. Two of them serve as module terminals 57b, 57d each electrically connected to the module 60 or the auxiliary module 100, and the other one of them serves as a board terminal (not shown) electrically connected to the calculation control board 80. Further, in the auxiliary module 100-side of the operation control board 70, the same number of terminal holes 76 as the number of signal terminals 64 are provided such that the signal terminals 104 of the auxiliary module 100 are inserted therein.

According to the example, even in a case where the modules 60, 100 including different driving circuits are provided, the modules 60, 100 can be provided so as to extend along the shaft length direction of the motor shaft 11 by using the mounting surface 45 of the heat sink 40. Thus, it is possible to restrain an increase in the size of the motor unit in a shaft radial direction of a motor shaft 11.

In addition, one or some of various electronic components to be provided in the wiring portion 50, the module 60, the operation control board 70, or the calculation control board 80 can be provided on the mounting surface 45 of the heat sink 40. That is, in this case, by utilizing a vacant space, it may be possible to reduce the size of the motor unit in the shaft radial direction of the motor shaft 11.

A resolver may be used for detection of the rotation angle of the motor 12. Note that, in a case where the resolver is used, the calculation control board 80 can be provided on (fixed to), for example, the mounting surface 45 of the heat sink 40 so as to extend along the shaft length direction of the motor shaft 11. That is, in this case, the operation control board 70 and the calculation control board 80 can be provided in an exchanged manner.

In the above embodiment, the operation control board 70 and the calculation control board 80 are configured separately, but can be configured as one control board. Note that such a control board is provided on or in the vicinity of the heat sink 40 by a technique that can yield the same effect as the effect of the above embodiment. In addition, as the technique to configure the operation control board 70 and the calculation control board 80 as one control board, the operation control board 70 and the calculation control board 80 may be connected to each other by a flexible board, or the entire board may be constituted by a flexible board.

Each of the operation control board 70 and the calculation control board 80 may be a board configured such that a mounting space is formed only on a surface or a reverse surface. The operation control board 70 and the calculation control board 80 may be provided only on a plane that perpendicularly intersects with the extension line extending from the shaft end part 11 a of the motor shaft 11. That is, in this case, the signal terminals 64 of the module 60 are extended in the shaft radial direction of the motor shaft 11, and then extended to the operation control board 70 along the shaft length direction of the motor shaft 11. Even in this case, the operations and effects (4), (5) in the above embodiment can be obtained.

A unit for the module including the semiconductor elements such as the switching elements may be changed. For example, the module can be formed per switching arm (a fundamental unit of a series circuit) in the inverter circuit. That is, in a case of a three-phase inverter, three modules are prepared for respective switching arms.

The module 60 may have another quadrilateral shape, a square shape or the like, instead of a rectangular shape. Even in such a case, when the signal terminals 64 are extended in the shaft radial direction of the motor shaft 11, it is possible to restrain an increase in the size of the motor unit in the shaft radial direction of the motor shaft 11 as compared to a case where the signal terminals 64 are extended in the shaft length direction of the motor shaft 11.

The wiring terminals 62 and the phase terminals 63 in the module 60 may be extended in the shaft length direction instead of the shaft radial direction of the motor shaft 11, based on an arrangement relationship with the wiring portion 50. In the above embodiment, the motor housing 14 and the wiring portion 50 are configured to make direct contact with each other, but the operation control board 70 or the calculation control board 80 may be sandwiched between the motor housing 14 and the heat sink 40, for example. Even in this case, the operations and the effects (8), (9) in the above embodiment can be obtained.

As long as each of the wiring portion 50 and the module 60 is fixed to extend along the shaft length direction of the motor shaft 11, and the wiring portion 50 and the module 60 are adjacent to each other, the other constituents of the motor controller 13, the mounting positions, and the like may be changed. That is, for example, the wiring portion 50 and the module 60 may be arranged in the shaft length direction on any of the mounting surfaces 43 to 46 of the heat sink 40. Even in this case, since the connection between the wiring portion 50 and the module 60 does not need to step over the heat sink 40, it is possible to shorten at least various terminals and the like (a supply passage) related to the connection, as compared to a case where the wiring portion 50 is connected to the module 60 with the heat sink 40 being sandwiched therebetween.

The heat sink 40 may be provided so as to be sandwiched between the wiring portion 50 and the module 60. For example, the wiring portion 50 may be provided around a circumference of the motor shaft 11, the heat sink 40 may be provided around the wiring portion 50, and the module 60 may be provided on an outer periphery of the heat sink 40.

The magnetic sensor 83a may be a sensor using a Hall IC or the like. A section of the mounting portion 42 of the heat sink 40 in the shaft radial direction of the motor shaft 11 may have a polygonal shape such as a triangle or a pentagon, for example.

The heat sink 40 may be fixed to the stator housing 20 (the motor housing 14) by a screw or the like. In the motor unit, a cooling structure for performing, for example, air-cooling using a blower (fan) may be employed instead of the heat sink 40, as long as heat dissipation from the wiring portion 50, the module 60, the operation control board 70, and the like can be promoted.

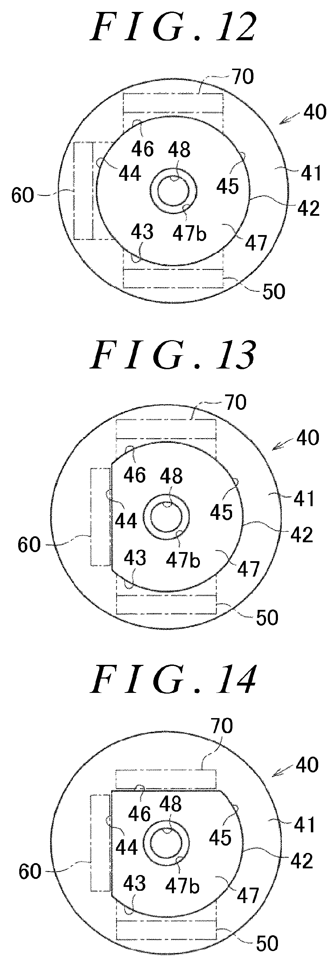

As illustrated in FIG. 12, the mounting portion 42 in the heat sink 40 may have a columnar shape. Note that the wiring portion 50, the module 60, and the operation control board 70 are fixed, by predetermined fastening members (screws or the like), to spherical mounting surfaces 43 to 46 formed on an outer periphery of the columnar-shaped mounting portion 42. Even in such a case, it is possible to restrain an increase in the size of the motor unit in the shaft radial direction of the motor shaft 11 as compared to a case where the control boards are provided only on a plane that perpendicularly intersects with the extension line extending from the shaft end part 11 a of the motor shaft 11.

As illustrated in FIGS. 13, 14, the mounting portion 42 in the heat sink 40 may include a planar mounting surface (a mounting surface 44 in FIG. 13, mounting surfaces 44, 46 in FIG. 14), and a spherical mounting surface (mounting surfaces 43, 45, 46 in FIG. 13, mounting surfaces 43, 45 in FIG. 14) in a mixed manner. Note that the wiring portion 50, the module 60, and the operation control board 70 are fixed, by predetermined fastening members (screws or the like), to the respective mounting surfaces. Even in such a case, it is possible to restrain an increase in the size of the motor unit in the shaft radial direction of the motor shaft 11 as compared to a case where the control boards are provided only on a plane that perpendicularly intersects with the extension line extending from the shaft end part 11a of the motor shaft 11. Herein, a mounting surface to be formed in a spherical shape is selected such that a member that easily generates heat, among the wiring portion 50, the module 60, and the operation control board 70, is preferentially disposed on a planar mounting surface.

The following additionally describes a technical idea that can be grasped from the above embodiment and other examples (modifications). The shaft end part of the motor shaft is provided with a detecting portion configured to detect a physical amount that changes according to the rotational movement of the motor and to output the physical amount thus detected to the above calculation controlling portion. When the shaft end part of the motor shaft is provided with the detecting portion as in the above configuration, the arrangement, in which at least one electronic component serving as the calculation controlling portion is provided on the first control board, is an optimal arrangement for the at least one electronic component. That is, in this case, it is possible to more appropriately restrain an occurrence of a dead space at the time when the at least one electronic component is provided.

The plurality of semiconductor elements is provided as a module in which the semiconductor elements are integrated and which has a rectangular shape with long sides and short sides. The module is provided such that the long-side direction thereof extends along the shaft length direction of the motor shaft. In the above configuration, the control board is fixed to extend along the shaft length direction of the motor shaft so as to extend along the signal terminals of the module. That is, in this case, a side of the module on which the signal terminals are projected and a side of the control board on which the connection with the signal terminals is made are disposed so as to be opposed to each other. Accordingly, the length of the signal terminals projected from the module can be shortened as much as possible, thereby making it is possible to restrain an increase in the size of the motor unit itself.

## Claims

1. A motor unit **characterized by** comprising:
a motor (12) that includes a rotatable motor shaft (11); and
a control board configured to execute a control to drive the motor (12), wherein:
the control board includes a first control board (80) and a second control board (70) each having a mounting space in which to provide at least one electronic component necessary to control and drive the motor (12);
the first control board (80) is provided such that the mounting space for the at least one electronic component perpendicularly intersects with an extension line extending from a shaft end part (11a) of the motor shaft (11) and extends along a shaft radial direction of the motor shaft (11) so as to allow the at least one electronic component to be disposed along the shaft radial direction of the motor shaft (11);
the second control board (70) is provided such that the mounting space for the at least one electronic component extends along a shaft length direction of the motor shaft (11) so as to allow the at least one electronic component to be disposed along the shaft length direction of the motor shaft (11); and
the motor (12) and the control board are unitized.

2. The motor unit according to claim 1, wherein:
the at least one electronic component provided on the first control board (80) includes at least one electronic control component serving as a calculation controlling portion that is configured to calculate a rotation angle of the motor (12) with use of a physical amount that changes according to rotational movement of the motor (12); and
the at least one electronic component provided on the second control board (70) includes at least one electronic component serving as an operation controlling portion that is configured to execute the control to drive the motor (12) with use of a calculation result obtained by the calculation controlling portion.
